# EUROPÄISCHE PATENTSCHRIFT

(11) **EP 0 434 660 B1**
(45) Veröffentlichungstag und Bekanntmachung des Hinweises auf die Patenterteilung: **03.05.1995**
(21) Anmeldenummer: 90890318.0
(22) Anmeldetag: 10.12.1990
(51) Int. Cl.: A47C 7/46, A47C 7/02, A47C 31/12

(54) **Anatomisch formbare Stütze**
Anatomically adjustable support
Support réglable anatomiquement

(30) Priorität: 18.12.1989 AT 2873/89
(43) Veröffentlichungstag der Anmeldung: 26.06.1991
(73) Patentinhaber: Berndorf Automotive Produkte Ges.m.b.H., 2560 Berndorf (AT)
(72) Erfinder:
(74) Vertreter: Widtmann, Georg, Dipl.-Ing. Dr. techn.

(56) Entgegenhaltungen:
- DE-A- 2 947 472
- GB-A- 2 013 487
- US-A- 4 153 293

## Beschreibung

Die Erfindung bezieht sich auf eine anatomisch formbare Stütze für Liege- und/oder Sitzmöbel, z. B. Kindersitz od. dgl.

Zur Vermeidung von gesundheitlichen Schäden bzw. überrascher Ermüdung ist es bekannt, die entsprechenden Sitz-/Liegemöbel entsprechend dem Körperbau des Benützers auszubilden. Die einfachste Vorgangsweise besteht darin, beispielsweise die Rückenlehne eines Sitzes entsprechend der erwünschten Krümmung einer Wirbelsäule auszubilden, oder die Sitzfläche unter Berücksichtigung der erforderlichen Auflageflächen im Becken- und Schenkelbereich zu formen. Auch bei Liegemöbeln ist es bekannt, die Druckfestigkeit, beispielsweise der Matratze, so zu gestalten, daß eine Stützung der Wirbelsäule erfolgt.

Da die exakt vorgegebenen anatomischen Stützen nach statistischen Werten erstellt werden und somit in der Regel keine optimale anatomische Anpassung darstellen, sind auch bereits Stützen bekannt geworden, die sowohl in der Lage als auch in der Tiefe bzw. Höhe veränderbar ausgebildet sind.

Aus der US-A 2,756.809 wird eine Stützlehne für Sesseln, Autositze od. dgl. bekannt, bei welcher aus einer rechteckigen Platte aus flexiblem Material, die in etwa der Größe der gesamten Sitzlehne entspricht, eine anatomisch anpaßbare Stützlehne gebildet wird. Die Metallplatte ist sowohl im oberen als auch unteren Bereich schwenkbar gelagert, wobei zwischen diesen beiden Lagerungsstellen etwa im Schulter- und Gürtelbereich des Benützers einstellbare Distanzstücke vorgesehen sind. Diese Distanzstücke können sowohl der Höhe nach, also beispielsweise je nach Tiefe der Krümmung der Wirbelsäule, als auch in Längserstreckung der Lehne jeweils über eigene Spindeltriebe eingestellt werden. Bei einer derartigen Stützlehne ist es erforderlich, daß selbst ohne Nachjustierung zumindest vier verschiedene Spindeltriebe betätigt werden, um die anatomische Anpassung der Stütze zu erreichen. Gleichzeitig sind die Krümmungen der Stützlehne, da symmetrisch, nicht an die anatomische Form angepaßt.

Aus der DE-B-1-1,169.625 wird eine Rückenlehne bekannt, die ein Stützteil aufweist, deren geformte Fläche aus elastisch biegsamen, bandförmigen, nebeneinanderliegenden Längsteilen aus Stahl aufgebaut ist, wobei zumindest eine Aufnahme für die Längsteile gegen die andere Aufnahme derselben bewegbar ist, wodurch die Krümmung in ihrer Höhenlage veränderbar ist.

Aus der AT-B-358.767 wird eine biegsame elastische Stütze bekannt, die eine hohe Anzahl von Variationen sowohl der Höhe als auch des Ortes von Maxima der Stütze erlaubt. Eine derartige Stütze weist sowohl Zug- als auch Stützelemente auf, die parallel zueinander angeordnet sind, wobei zwischen diesen beiden ortsveränderliche Abstandhalter vorgesehen sind, über welche die exakte Lage der Maxima der Unterstützung festlegbar ist. Eine derartige Vorrichtung erlaubt zwar einen besonders hohen Komfort bei der Benützung, ist jedoch aufgrund des hohen feinmechanischen Aufbaues mit einer Vielfalt von Teilen und hoher Motagezeiten besonders aufwendig, wodurch einer weiten Verbreitung dieser elastischen Stütze erhebliche Grenzen gesetzt sind.

Aus der GB-A 2 013 487 wird eine anatomisch formbare Rückenlehne bekannt, die eine Platte besitzt, welche zwei über die Längsrichtung der Platte nur teilweise durchgehende Ausnehmungen aufweist. Eine Krümmung der Platte wird durch Zueinanderbewegen der Endbereiche der Platte erreicht, wobei die gekrümmte Platte als solche auch noch lageverändert werden kann.

In der DE-A 29 47 472 wird eine anatomisch formbare Stütze für Sitzmöbel beschrieben. Diese Stütze weist einen Bogen aus elastisch verformbarem Material auf, welcher als Gitter ausgebildet ist. Dieses Gitter besitzt zwei Längsstreben, die jeweils mit Querstreben verbunden sind, wobei Längs- und Querstreben integral ausgebildet sind. Der Abstand der Querstreben untereinander ist unterschiedlich. An zwei höhenmäßig voneinander entfernten Stellungen nehmen Zugelemente Angriff, wodurch sowohl die Höhe als auch die Lage der Krümmung der Stütze verändert werden kann.

Die vorliegende Erfindung hat sich zum Ziel gesetzt, eine anatomisch formbare Stütze zu schaffen, die möglichst einfach ausgebildet ist, mit geringer Kraft betätigt werden kann und die erlaubt, die Form der Stütze mit Ausnahme der Höhe und gegebenenfalls der Lage prädestiniert zu halten, wobei sowohl symmetrische als auch asymmetrische Ausbildungen der Stütze ohne zusätzlichen Aufwand bei entsprechender Ausbildung der Stütze möglich sind.

Die erfindungsgemäße anatomisch formbare Stütze für Liege- und/oder Sitzmöbel, z. B. Kindersitze, Flugzeugsitze, Autositze, Sitzfläche, Lehne, Liege od. dgl., mit einer Platte mit elastisch verformbarem Material, z. B. Legierungen, glasfaserverstärktem Polyester od. dgl., welche mit zumindest zwei zueinander bewegbaren, z. B. mit einem Zugelement, gegenüberliegenden Bereichen, insbesondere Enden der Platte, mit einstellbarer Scheitelhöhe, krümmbar ausgebildet ist, wobei die Platte außerhalb der gegenüberliegenden Bereiche in Bewegungsrichtung dieser gesehen, insbesondere zwischen diesen Bereichen, unterschiedliche elastische Formbarkeit aufweisen besteht im wesentlichen darin, daß die unterschiedliche Verformbarkeit mit variierender Wandstärke der Platte ausgebildet ist und die Scheitelhöhe gegebenenfalls unterstützungslos ist. Mit einer derartig anatomisch einstellbaren Stütze ist einerseits die Höhe der Scheitelhöhe einstellbar und gleichzeitig berücksichtigt, daß die körperlichen Krümmungen eines Lebewesens bestimmte Formen aufweisen. So ist beispielsweise die Krümmung der Wirbelsäule, insbesondere im Bereich der Taille, eines Menschens asymmetrisch, so daß zur Unterstützung der Wirbeln in Längsrichtung der Wirbelsäule eine asymmetrische Ausbildung der Krümmung erforderlich ist. Weiter ist die Höhe des Beckens von Frau und Mann und sind die Größe der Wirbeln von Frau und Mann unterschiedlich, so daß selbst bei gleicher Körpergröße, aber unterschiedlichem Geschlecht, die Krümmungen sowohl in Höhe als auch Tiefe der Wirbelsäule unterschiedlich hoch liegen. Anderseits ist es, beispielsweise auf Grund des extremen Wachstums eines Kindes, erforderlich, die Krümmung des Sitzes, insbesondere der Sitzlehne quer zur Wirbelsäulenrichtung, veränderlich auszubilden, da diese Krümmung zwar, bezogen auf diese Richtung, symmetrisch ist, jedoch je nach Alter des Kindes der Breite des Brustkorbes entsprechend zu halten ist, damit keine, wenn auch nur kurzfristige Verformung des Brustkorb es eines im starken Wachstum begriffenen Kindes erfolgt. Sodann besteht die Möglichkeit, die Sitzfläche so, insbesondere asymmetrisch, auszugestalten, daß eine Auflagerung der Oberschenkel erfolgt, die eine gleichmäßige Abstützung bei denselben erlaubt, ohne Druckspitzen zu verursachen. Durch die variierende Wandstärke der Platte kann auf besonders einfache Art eine bestimmte Ausbildung des Kurvenverlaufes, z. B. symmetrisch oder asymmetrisch, erhalten werden, wobei sowohl die Kräfte zur Betätigung der Stütze besonders geringgehalten werden können und eine hohe Belastbarkeit gegeben ist.

Ist die unterschiedliche elastische Verformbarkeit mit Materialschwächungen, insbesondere Durchbrechungen, z. B. durchgehende Löcher, die durch Stanzen, Bohren, aber auch gleichzeitig mit der Bildung der Platte geformt sein können, die vorzugsweise randfern angeordnet sind, in der Platte gebildet, so ist eine geographische Anpassung der anatomisch formbaren Stütze besonders einfach möglich. Wie bekannt, sind sowohl der Körperbau, als auch die Körpergröße, als auch die Gewichtsverteilung innerhalb eines Körpers, Funktionen der geographischen Breite, als auch -Höhe, sodaß je nach Bestimmungsort eines derartigen, den amatomisch erforderlichen Bedingungen, entsprechenden Möbels besonders leicht erfüllbar werden, wobei bei randferner Anordnung der Durchbrechungen eine höhere Lebensdauer sowohl der Stütze als auch der diese gegebenenfalls umgebenden Umhüllung, z. B. aus Schaumstoff, gewährleistet ist. Weiters ist mit durchgehenden Durchbrechungen eine Zirkulation von Luft, die z. B. mit Feuchtigkeit beladen sein kann, besonders begünstigt.

Es hat sich gezeigt, daß eine derartige Krümmung besonders den anatomischen Erfordernissen angepaßt ist, wenn die Wandstärke von einem zum gegenüberliegenden Bereich auf etwa zwei Drittel bis ein Drittel, insbesondere in etwa auf die Hälfte, abnimmt.

Ist die Platte entlang einer Führung, welche insbesondere parallel zur Bewegungsrichtung der zueinander bewegbaren Bereiche vorgesehen ist, beweg- und vorzugsweise festlegbar, so ist neben der Möglichkeit der den anatomischen Anfordernungen vorsehbaren Ausbildung der Krümmung auch der Ort der Scheitelhöhe, der selbst bei gleicher Größe von Mann und Frau unterschiedlich ist, besonders einfach festlegbar.

Sind in den zueinander bewegbaren Bereichen Widerlager für den Kraftangriff, insbesondere für das Zugelement, gebildet, so kann für eine besonders gleichmäßige Kraftverteilung Sorge getragen werden und damit eine hohe Lebensdauer gewährleistet sein.

Sind die Widerlager mit der Platte materialbündig ausgebildet, so kann einerseits durch einen einzigen Formbildungsvorgang die Stütze erzeugt werden, wobei gleichzeitig keine Krafteinleitungsspitzen, die nicht kontinuierlich verteilt sind, verursacht werden.

Ist zumindest ein, insbesondere sind beide Widerlager, im Bereiche des Kraftangriffes im Querschnitt teilkreisförmig ausgebildet, so kann die Krafteinleitung besonders zielgerichtet und selbstausgleichend, unter minimalen Kraftspitzen, durchgeführt werden.

Weisen die Querrippen an ihren jeweiligen Enden Ausnehmungen zur Aufnahme der Führung der Platte auf, so kann auf besonders einfache Art und Weise die Führung der Platte entlang der Bewegungsrichtung durchgeführt werden, sodaß das Krümmungsmaximum an den richtigen Ort verschiebbar ist. Die Kraftverteilung entlang der Querrichtung ist auch durch die Querrippen besonders kraftausgleichend gestaltet.

Sind die Ausnehmungen für die Führungen sich verengend und sodann sich erweiternd gestaltet, sodaß eine Engstelle gebildet wird, können in den Ausnehmungen die Führungen ohne zusätzlichen Aufwand gehalten werden, sodaß auch derartige Führungen ohne zusätzlichen weiteren Gewichtsaufwand erhaltbar sind.

Sind die Führungen mit Rundstäben, insbesondere Rundeisen, gebildet, so kann auf besonders einfache Art und Weise eine Orientierung der Kräfte durch einseitig verstärkte Profile vermieden werden.

Sind die Führungen mit einem U-förmigen Bogen gebildet, dessen Basis aus der Ebene der Schenkel gebogen ist, die gegebenenfalls eine mittige Kröpfung aufweist, so ist eine besonders einfache mechanische Verbindung zwischen der Stütze und der Sitzfläche bzw. der Lehne gewährleistet, wobei gleichzeitig durch die Kröpfung eine vollkommene Bewegungsfreiheit gewährleistet ist.

Weisen die Schenkel an ihren freien Enden Umbiegungen auf, die gegebenenfalls die Querrippen teilweise umgreifen, ist eine besonders einfache Beschränkung der Bewegung der Querrippen entlang der Schenkel sichergestellt.

Dient zur Verschiebung der Platte entlang der Führung und/oder zur Bewegung der Bereiche zueinander jeweils ein Bowdenzug, der vorzugsweise über im Querschnitt zumindest teilweise kreisförmig ausgebildete Stützkörper angreift, so ist ein Bewegungsmechanismus vorgegeben, der besonders einfach anordenbar ist, da Bowdenzüge frei im Raum verlegbar sind, ohne ihre Bedienbarkeit einzubüßen und durch die im Querschnitt teilkreisförmigen Stützkörper, die im teilkreisförmigen Widerlager gelagert sein können, ist eine richtungsgerechte Einleitung der Kräfte in die Stütze gewährleistet.

Ist die Platte im unbelasteten Zustand bereits quer zur Bewegungsrichtung vorgekrümmt, so kann die Krümmung in Form und Lage mit den entsprechenden Möglichkeiten zur Änderung besonders gut vorgegeben werden, wobei weiters der Kraftaufwand, welcher z. B. händisch oder motorisch aufgebracht werden muß, bereits am Anfang der Krümmbewegung geringer gehalten werden kann.

Im folgenden wird die Erfindung anhand der Zeichnungen näher erläutert:

Es zeigen:
Fig. 1 einen Autositz im Querschnitt,
Fig. 2 und 3 einen Kindersitz,
Fig. 4 eine Stütze in Ansicht von vorne,
Fig. 5 die Stütze gemäß Fig. 4 in Ansicht von oben,
Fig. 6 einen Schnitt durch die Stütze entlang der Linie 4/4, die
Fig. 7 und 8 in schematischer Darstellung unterschiedliche Krümmungen von zwei verschiedenen Stützen,
Fig. 9 eine bereits vorgekrümmte Platte sowie
Fig. 10 ein Kraft/Weg-Diagramm.

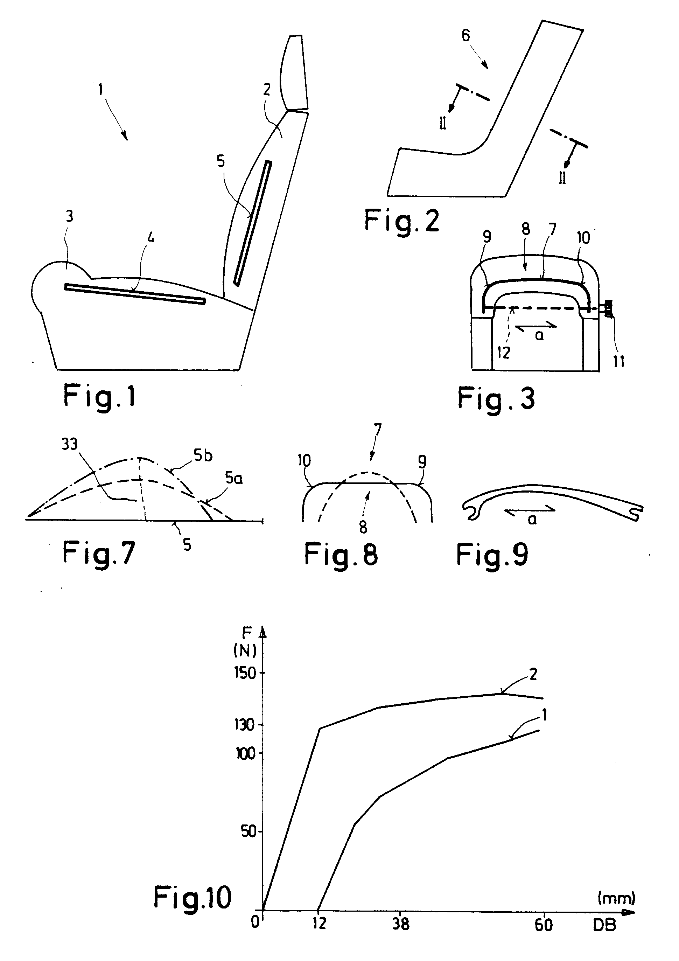

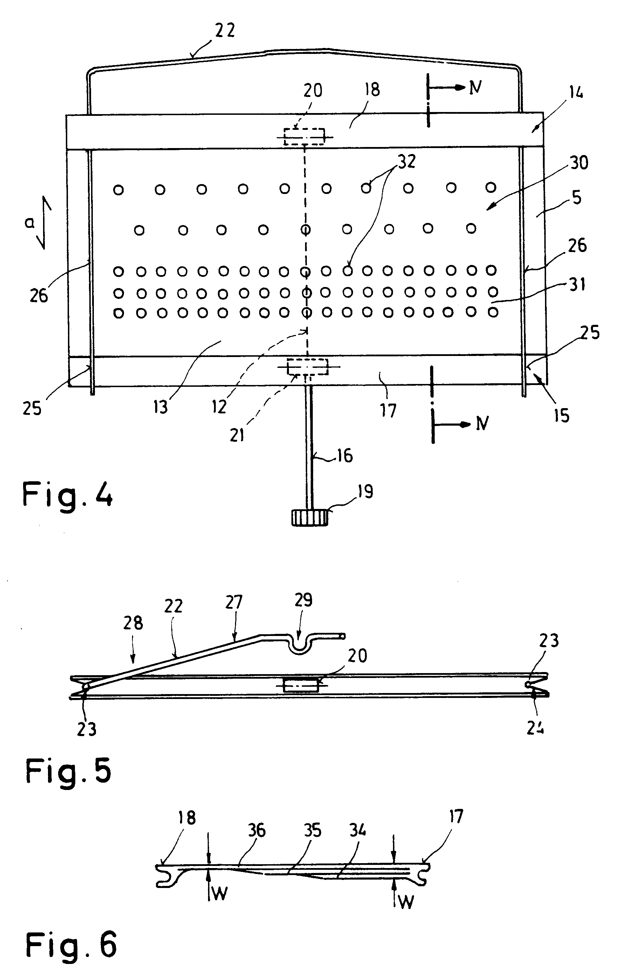

Der in Fig. 1 dargestellte Autositz 1 weist eine Lehne 2 und einen Sitzteil 3 auf. Sowohl in der Lehne als auch im Sitzteil sind anatomisch formbare Stützen 4, 5 angeordnet. Die Stützen sind mit dem Rahmen und der Federung des Autositzes verbunden und jeweils von einer nicht dargestellten Schichte aus Polstermaterial, z. B. Polyurethanschaum, umgeben. Durch einen nicht dargestellten Bowdenzug können die Stützen 4, 5 entsprechend den anatomischen Anforderungen des Benützers gekrümmt werden, sodaß die Wirbelsäule entsprechend ihrer Form mit einer asymmetrischen Krümmung der Stütze abgestützt werden kann. Bei der im Sitzteil vorgesehenene Stütze besteht ebenfalls die Möglichkeit, die Sitzfläche derartig in ihrer Auflagefläche zu verändern, daß eine gleichzeitige Stütze der Oberschenkel des Benützers gegeben ist, wobei gleichzeitig auch teilweise die Sitzhöhe einstellbar wird.

Bei dem in Fig. 2 dargestellten Kindersitz 6 ist im Rückenteil eine erfindungsgemäße Stütze vorgesehen, wobei die Stütze 7 im mittleren Bereich 8 einen größeren Widerstand gegen elastische Verformung leistet, als die beiden Randbereiche 9, 10. Durch den Bowdenzug 11 mit dem Zugelement 12 kann die Krümmung in Bewegungsrichtung a quer zur Lehne verändert werden. Dadurch, daß der mittlere Teil einen höheren Widerstand gegen eine elastische Verformung als die beiden Randteile aufweist, wird sichergestellt, daß bei breitenmäßiger Veränderung der Mulde, welche zur Aufnahme des Rückens des Kindes dient, diese nicht kreisförmig wird, sondern daß eine dem Rücken und Brustkorb des Kindes angepaßte Mulde erhalten wird. Eine derartige Mulde stellt sicher, daß ein Kind in einem derartigen Sitz, z. B. mit einem Gurt exakt lagefixiert sitzen kann, wobei je nach Alter und Größe des Kindes die Mulde zur Aufnahme des Rückens gestaltet werden kann. Das Zugelement kann auch in einem Haltebogen, der für die Abstützung mit den Händen des Kindes dient, vorgesehen sein, wobei der Haltebogen auch öffen- und schließbar ausgebildet sein kann.

Eine derartige Gestaltung eines Sitzes kann auch für sogenannte Schalensitze, wie sie beispielsweise bei Sportwagen üblich sind, in Verwendung kommen. Der Bowdenzug und damit das Zugelement ist am unteren Ende der Lehne angeordnet, sodaß keine Beeinträchtigung des Sitzkomforts gegeben ist. Weiters wird dadurch eine besonders vorteilhafte Ausgestaltung erreicht, da die Lehne, wie an sich erwünscht, nach oben sich erweiternd ausgebildet werden kann.

Die in Fig. 4 dargestellte Stütze 5 kann nicht nur für den Lehnenteil des Sitzes in Fig. 1, sondern auch für den Sitzteil 3 Verwendung finden. Die Stütze weist eine Platte 13 auf, die zwei einander gegenüberliegende Bereiche 14, 15 besitzt, die an den jeweiligen Enden angeordnet sind, an die das Zugelement 12 und der das Zugelement teilweise umhüllende Schlauch 16, u. zw. an den durch Querrippen gebildeten Widerlagern 17, 18 angreifen. Die Einstellung erfolgt über das Handrad 19. Diese Widerlager sind, wie besonders deutlich Fig. 6 entnehmbar, mit der Platte materialbündig ausgeführt und sind im Querschnitt teilkreisförmig. Dementsprechend sind ebenfalls im Querschnitt kreisförmige Stützkörper 20, 21 vorgesehen, sodaß bei Betätigung eines Zugelementes über das Handrad 19 eine leichtgleitende Orientierung der Stützkörper im Widerlager gegeben ist. An den Enden der Widerlager ist eine Führung 22 vorgesehen, die aus einem Rundstahl aufgebaut ist. Die Führung ist an den jeweiligen seitlichen Enden der Widerlager 17, 18, u. zw. in Ausnehmungen 23, die sich verengend und dann sich erweiternd, mit einer Engstelle 24 ausgebildet, sodaß die Montage der Führung in den Querrippen durch elastische Verformung des Widerlagers erfolgen kann, da das Rundeisen über die Engstelle gedrückt wird. Die Führung weist am freien Ende der Schenkel 26 Umbiegungen 25 auf. Wie besonders deutlich aus Fig. 4 ersichtlich, ist die Führung im wesentlichen U-förmig ausgebildet.

Wie aus Fig. 5, in welcher die Führung aus Übersichtsgründen nur teilweise dargestellt, entnehmbar ist, weist die Basis 27 des U's Schenkel 28 auf, die aus der Ebene der Schenkel 26 gebogen sind, wobei eine Kröpfung 29 zur Fixierung der Führung in der Lehne vorgesehen ist. Die Stütze kann nun ihrerseits entweder über einen doppelten Bowdenzug oder beispielsweise über eine Spindel entlang der Führung bewegt werden. Mit einer derartigen Bewegung der Stütze entlang der Führung kann der Ort des Scheitels in Längsrichtung zur Lehne oder auch der Sitzfläche verändert werden.

Wie in Fig. 6 ersichtlich, nimmt die Wandstärke w stufenförmig, u. zw. auf die Hälfte, ab, wodurch es bei Kraftbeaufschlagung zur Ausbildung einer asymmetrischen Krümmung kommt, die unterstützungsfrei im Scheitel sein kann, sodaß beispielsweise bei Stoßbelastungen auch eine Lageveränderung des Scheitels erfolgen kann. Die Platte ist mit drei Laminaten 34, 35, 36 mit unterschiedlicher Länge ausgeführt, wodurch die stufenförmige Ausführung erhalten wird. Als Material für eine derartige Platte können beispielsweise ungesättigte Polyesterharze, Orthophthalatpolyesterharze, wobei Glasfasern entweder orientiert oder als Wirrfasern vorliegen können, verwendet werden. Bei kontinuierlicher Änderung der Materialstärke hat sich eine Spritzmasse mit Kurzfasern bewährt. Das Material soll schwer bis unbrennbar sein und gegenüber anderem Kunststoff, z. B. Schaumstoff, inert sein. Auch eine Sandwichstruktur kann vorgesehen sein. Eine andere Möglichkeit, in der Platte unterschiedlich verformbare Bereiche vorzusehen, besteht darin, wie in Fig. 4 dargestellt, daß beispielsweise im Bereich 30 weniger Durchbrechungen 32 angeordnet sind, als im Bereich 31, sodaß der Bereich 31 leichter verformbar ist, als der Bereich 30. Der Vorteil derartiger Durchbrechungen besteht auch darin, daß diese nach der Fertigung der Platte angebracht werden können, sodaß eine hohe Flexibilität in der Ausbildung der Krümmung gegeben ist. Bei der Fertigung kann mit einem Stanzvorgang die Platte aus einem Band abgelängt werden, wobei gleichzeitig die Durchbrechungen mit unterschiedlicher Form rund, oval, eckig usw. erzeugt werden können. Die Durchbrechungen können auch durch Bohren od. dgl. angefertigt werden. Durchbrechungen haben auch weiters den Vorteil, daß sie eine Zirkulation, beispielsweise der Luftfeuchtigkeit, durch die Stütze ebenfalls erlauben und somit ein Transpirieren verhindern.

In Fig. 7 ist eine Stütze 5 schematisch dargestellt, wobei die Stütze in verschiedenen Krümmungsstadien 5a und 5b dargestellt ist. Wie leicht ersichtlich, ist der linke Teil der Stütze jener Bereich, der der elastischen Verformbarkeit einen größeren Widerstand entgegensetzt, als der rechte Bereich, sodaß sich das Maximum der Krümmung entlang der Linie 33 bewegt.

Bei der in Fig. 8 dargestellten Stütze 7 weist der mittlere Bereich 8 einen größeren Widerstand zur elastischen Verformung auf, als die beiden Randbereiche 9, 10, sodaß bei einer Verformung der mittlere Bereich im wesentlichen geradlinig verbleibt, wohingegen die beiden seitlichen Bereiche mehr deformiert werden, womit eine Mulde mit veränderbarer Weite entsteht, wobei ein ebener Bereich zur Aufnahme, beispielsweise des Rückens, z. B. beim Kindersitz, gemäß Fig. 3 gewährleistet ist. Die strichliert dargestellte Stütze ist die Stütze mit einer besonders engen Mulde, wohingegen mit einer ganzen Linie dargestellte Stütze eine besonders weite Mulde bildet.

In Fig. 9 ist eine Platte in Analogie zu Fig. 6 im Querschnitt dargestellt. Zum Unterschied von der Platte gemäß Fig. 6 ist diese bereits gemäß Fig. 9, z. B. von Zugkräften in Bewegungsrichtung beaufschlagt, gekrümmt ausgebildet. Durch eine derartige gekrümmte Ausbildung kann einerseits der Ort und auch teilweise die Form der Krümmung neben der unterschiedlichen Ausbildung der Flexibilität vorbestimmt werden.

In Fig. 10 sind in einem Kraft/Weg-Diagramm die jeweiligen Kräfte für eine bestimmte Durchbiegung dargestellt. Die Kurve 1 entspricht der Ausführungsform gemäß Fig. 9, bei welcher die Platte vorgekrümmt ist, wohingegen die Kurve 2 einer Platte entspricht, die nicht vorgekrümmt ist und entsprechend Fig. 6 ausgebildet ist. Wie diesen beiden Diagrammen zu entnehmen ist, ist für die vorgewölbte Platte ein geringerer Kraftaufwand, insbesondere in der Anfangsphase, erforderlich, um eine bestimmte Krümmung zu erreichen. Vorgekrümmte Platten erlauben somit einen geringeren Kraftaufwand, der insbesondere bei händischer Bedienung von hohem Vorteil ist, um die erwünschte Wölbung einzustellen. Erfolgt die Bedienung motorisch, kann ein schwächerer und damit kleinerer Motor mit geringerer Energieaufnahme verwendet werden.

## Patentansprüche

1. Anatomisch formbare Stütze (4, 5, 7) für Liege- und/oder Sitzmöbel, z. B. Kindersitze, Flugzeugsitze, Autositze, Sitzfläche, Lehne, Liege od. dgl., mit einer Platte (13) mit elastisch verformbarem Material, z. B. Legierungen, glasfaserverstärktem Polyester od. dgl., welche durch Zueinanderbewegen, z. B. mit einem Zugelement (12), zumindest zweier Bereiche, insbesondere Enden (14, 15), der Platte (13) mit einstellbarer Scheitelhöhe krümmbar ausgebildet ist, wobei die Platte (13) außerhalb der gegenüberliegenden Bereiche (14, 15) in Bewegungsrichtung (a) dieser gesehen, insbesondere zwischen diesen Bereichen, unterschiedliche elastische Verformbarkeit aufweist, dadurch gekennzeichnet, daß die unterschiedliche Verformbarkeit mit variierender Wandstärke (w) der Platte (13) gebildet ist, und die Scheitelhöhe gegebenenfalls unterstützungslos ist.

2. Anatomisch formbare Stütze nach Anspruch 1, dadurch gekennzeichnet, daß die Bereiche (8, 9, 10, 30, 31) unterschiedlicher elastischer Verformbarkeit stufenförmig ineinander übergehen.

3. Anatomisch formbare Stütze nach Ansprüch 1, 2 dadurch gekennzeichnet, daß die Wandstärke von einem zum gegenüberliegenden Bereich auf etwa zwei Drittel bis ein Drittel, vorzugsweise auf etwa die Hälfte, abnimmt.

4. Anatomisch formbare Stütze nach einem der Ansprüche 1 bis 3, dadurch gekennzeichnet, daß die unterschiedliche elastische Verformbarkeit mit Materialschwächungen, insbesondere Durchbrechungen (32), die vorzugsweise randfern angeordnet sind, in der Platte (13) gebildet ist.

5. Anatomisch formbare Stütze nach einem der Ansprüche 1 bis 4, dadurch gekennzeichnet, daß die Platte (13) entlang einer Führung (22), welche insbesondere parallel zur Bewegungsrichtung der zueinander bewegbaren Bereiche vorgesehen ist, beweg- und vorzugsweise festlegbar ist.

6. Anatomisch formbare Stütze nach einem der Ansprüche 1 bis 5, dadurch gekennzeichnet, daß in den zueinander bewegbaren Bereichen Widerlager (17, 18) für den Kraftangriff, insbesondere das Zugelement (12), gebildet sind.

7. Anatomisch formbare Stütze nach Anspruch 6, dadurch gekennzeichnet, daß die Widerlager (17, 18) mit der Platte (13) materialbündig ausgebildet sind.

8. Anatomisch formbare Stütze nach Anspruch 6 oder 7, dadurch gekennzeichnet, daß zumindest ein, insbesondere beide Widerlager (17, 18), zumindest im Bereich des Kraftangriffes im Querschnitt teilkreisförmig ausgebildet ist/sind.

9. Anatomisch formbare Stütze nach einem der Ansprüche 1 bis 8, dadurch gekennzeichnet, daß die Platte (13) Querrippen aufweist, mit welchen die, insbesondere mittig derselben, angeordnete Widerlager gebildet sind.

10. Anatomisch formbare Stütze nach Anspruch 9, dadurch gekennzeichnet, daß die Querrippen an ihren jeweiligen Enden Ausnehmungen (23) zur Aufnahme der Führung (22) der Platte (13) aufweisen.

11. Anatomisch formbare Stütze nach einem der Ansprüche 1 bis 10, dadurch gekennzeichnet, daß die Ausnehmungen (23) für die Führungen sich verengend und sodann sich erweiternd, also mit einer Engstelle (24), ausgebildet sind.

12. Anatomisch formbare Stütze nach einem der Ansprüche 1 bis 11, dadurch gekennzeichnet, daß die Führung (22) mit Rundstäben, insbesondere Rundeisen, ausgebildet ist.

13. Anatomisch formbare Stütze nach einem der Ansprüche 1 bis 12, dadurch gekennzeichnet, daß die Führung (22) mit einem U-förmigen Bogen gebildet ist, dessen Basis (27) aus der Ebene der Schenkel (26) gebogen ist, die gegebenenfalls eine mittige Kröpfung (29) aufweist.

14. Anatomisch formbare Stütze nach Anspruch 13, dadurch gekennzeichnet, daß die Schenkel (26) an ihren freien Enden Umbiegungen (25) aufweisen, die gegebenenfalls die Querrippen teilweise umgreifen.

15. Anatomisch formbare Stütze nach einem der Ansprüche 1 bis 14, dadurch gekennzeichnet, daß zur Verschiebung der Platte (13) entlang der Führung (22) und/oder zur Bewegung der Bereiche zueinander jeweils ein Bowdenzug dient, welcher vorzugsweise über im Querschnitt zumindest teilweise kreisförmig ausgebildete Stützkörper (20, 21) angreift.

16. Anatomisch formbare Stütze nach einem der Ansprüche 1 bis 15, dadurch gekennzeichnet, daß die Platte (Fig. 9) im unbelasteten Zustand bereits quer zur Bewegungsrichtung (a) vorgekrümmt ist.

## Claims

1. Anatomically formable support (4, 5, 7) for reclining and/or sitting furniture, e.g. child seats, aircraft seats, motor vehicle seats, seat, backrest, divan or the like, with a plate (13) made with elastically deformable material, e.g. alloys, glass fibre reinforced polyester or the like, which is embodied so that it can be curved by moving at least two areas, in particular ends (14, 15), of the plate (13) towards one another with an adjustable vertex, e.g. with a traction element (12), the plate (13) exhibiting different elastic deformability outside the opposing areas (14, 15), in particular between these areas, viewed in the direction of movement (a) of these, characterised in that the different deformability is achieved with varying wall thickness (w) of the plate (13), and the vertex may be unsupported.

2. Anatomically formable support according to claim 1, characterised in that the areas (8, 9, 10, 30, 31) of different elastic deformability run into one another in steps.

3. Anatomically formable support according to claim 1 or 2, characterised in that the wall thickness decreases from one area to the opposing area to approximately two thirds to one third, preferably to approximately half.

4. Anatomically formable support according to one of claims 1 to 3, characterised in that the different elastic deformability is achieved with material weaknesses, in particular perforations (32), which are preferably disposed remote from the edge, in the plate (13).

5. Anatomically formable support according to one of claims 1 to 4, characterised in that the plate (13) can be moved and preferably locked along a guide (22), which is provided in particular parallel to the direction of movement of the areas movable towards one another.

6. Anatomically formable support according to one of claims 1 to 5, characterised in that abutments (17, 18) for the application of the force, in particular the traction element (12), are formed in the areas movable towards one another.

7. Anatomically formable support according to claim 6, characterised in that the abutments (17, 18) are embodied flush with the material of the plate (13).

8. Anatomically formable support according to claim 6 or 7, characterised in that at least one, in particular both abutments (17, 18), at least in the area of application of the force, is/are embodied partially circular in cross-section.

9. Anatomically formable support according to one of claims 1 to 8, characterised in that the plate (13) exhibits transverse ribs with which the abutments, disposed in particular in the middle thereof, are formed.

10. Anatomically formable support according to claim 9, characterised in that at their respective ends the transverse ribs exhibit recesses (23) to accommodate the guide (22) of the plate (13).

11. Anatomically formable support according to one of claims 1 to 10, characterised in that the recesses (23) for the guides are embodied so that they narrow and then widen, i.e. with a narrow location (24).

12. Anatomically formable support according to one of claims 1 to 11, characterised in that the guide (22) is embodied with round bars, in particular round iron bars.

13. Anatomically formable support according to one of claims 1 to 12, characterised in that the guide (22) is formed with a U-shaped bow, the base (27) of which is bent out of the plane of the limbs (26) which may exhibit a central offset (29).

14. Anatomically formable support according to claim 13, characterised in that at their free ends the limbs (26) exhibit bent portions (25) which may partially grip around the transverse ribs.

15. Anatomically formable support according to one of claims 1 to 14, characterised in that for movement of the plate (13) along the guide (22) and/or for movement of the areas towards one another in each case a Bowden cable is used which preferably acts through supporting bodies (20, 21) at least partially circular in cross-section.

16. Anatomically formable support according to one of claims 1 to 15, characterised in that the plate (fig. 9) is pre-curved at right-angles to the direction of movement (a) in the unladen state.

## Revendications

1. Elément d'appui (4, 5, 7) déformable en fonction de l'anatomie pour des meubles de couchage et/ou des sièges, par exemple des sièges d'enfant, des sièges d'avion, des sièges d'automobile, des assises et des dossiers de sièges, des surfaces de repos de lits et analogues, comportant une plaque (13) avec un matériau déformable élastiquement, par exemple des alliages, du polyester renforcé par fibres de verre ou analogue, laquelle plaque est agencée de manière à pouvoir être cintrée avec une hauteur de sommet réglable, par rapprochement, par exemple à l'aide d'un élément de traction (12), d'au moins deux zones, notamment des extrémités (14, 15) de la plaque (13), la plaque (13) présentant en dehors des zones (14, 15) en vis-à-vis, vu dans la direction de déplacement de celles-ci, une aptitude variable à la déformation élastique, caractérisé par le fait que l'aptitude variable à la déformation est obtenue grâce à une épaisseur de paroi (w) variable de la plaque et que, le cas échéant, le sommet n'est pas soutenu.

2. Elément d'appui déformable en fonction de l'anatomie selon la revendication 1, caractérisé par le fait que les zones (8, 9, 10, 30, 31) qui présentent une aptitude variable à la déformation élastique se raccordent de manière étagée.

3. Elément d'appui déformable en fonction de l'anatomie selon la revendication 1, caractérisé par le fait que d'une zone à la zone en vis-à-vis, l'épaisseur de paroi décroît pour atteindre deux tiers à un tiers, de préférence la moitié.

4. Elément d'appui déformable en fonction de l'anatomie selon l'une des revendications 1 à 3, caractérisé par le fait que l'aptitude variable à la déformation élastique est obtenue par des affaiblissements du matériau, en particulier des découpes (32) dans la plaque (13), lesquelles découpes sont disposées de préférence loin des bords.

5. Elément d'appui déformable en fonction de l'anatomie selon l'une des revendications 1 à 4, caractérisé par le fait que la plaque (13) peut être déplacée et de préférence immobilisée le long d'une glissière (22) prévue de préférence parallèlement à la direction de déplacement des zones mobiles en direction l'une de l'autre.

6. Elément d'appui déformable en fonction de l'anatomie selon l'une des revendications 1 à 5, caractérisé par le fait que des contre-appuis (17, 18) pour l'application de la force, notamment pour l'élément de traction (12) sont formés dans les zones mobiles en direction l'une de l'autre.

7. Elément d'appui déformable en fonction de l'anatomie selon la revendication 6, caractérisé par le fait que les contre-appuis (17, 18) font corps avec le matériau de la plaque (13).

8. Elément d'appui déformable en fonction de l'anatomie selon l'une des revendications 6 ou 7, caractérisé par le fait qu'au moins un contre-appui, plus particulièrement les deux contre-appuis (17, 18), est/sont agencé(s) en forme de secteur de cercle au moins dans la région de l'application de la force.

9. Elément d'appui déformable en fonction de l'anatomie selon l'une des revendications 1 à 8, caractérisé par le fait que la plaque (13) comporte des nervures transversales sur lesquelles sont aménagés les contre-appuis, notamment au milieu desdites rainures.

10. Elément d'appui déformable en fonction de l'anatomie selon la revendication 9, caractérisé par le fait que les nervures transversales présentent à leurs extrémités respectives des évidements (23) pour recevoir la glissière (22).

11. Elément d'appui déformable en fonction de l'anatomie selon l'une des revendications 1 à 10, caractérisé par le fait que les évidements (23) pour les glissières sont agencés de manière telle qu'il se rétrécissent puis s'élargissent, c'est-à-dire sont agencés avec un rétrécissement (24).

12. Elément d'appui déformable en fonction de l'anatomie selon l'une des revendications 1 à 11, caractérisé par le fait que la glissière (22) est constituée par des tiges rondes, en particulier par des fers ronds.

13. Elément d'appui déformable en fonction de l'anatomie selon l'une des revendications 1 à 12, caractérisé par le fait que la glissière (22) est formée par un élément en U dont la base (27) est pliée à partir du plan de la branche (26) qui, le cas échéant, présente un coude (29) central.

14. Elément d'appui déformable en fonction de l'anatomie selon la revendication 13, caractérisé par le fait que les branches (26) présentent à leurs extrémités libres des parties repliées qui le cas échéant entourent partiellement les nervures transversales.

15. Elément d'appui déformable en fonction de l'anatomie selon l'une des revendications 1 à 14, caractérisé par le fait qu'un mécanisme à câble Bowden sert au déplacement de la plaque (13) le long de la glissière (22) et/ou au déplacement des zones en direction l'une de l'autre, lequel mécanisme agit par l'intermédiaire d'éléments d'appui (20, 21) au moins partiellement circulaires.

16. Elément d'appui déformable en fonction de l'anatomie selon l'une des revendications 1 à 15, caractérisé par le fait qu'à l'état non précontraint, la plaque (figure 9) présente une courbure transversalement à la direction de déplacement (a).
